(19) Europäisches Patentamt
European Patent Office
Office européen des brevets

(11) **EP 4 616 942 A1**

(12) **EUROPEAN PATENT APPLICATION**
published in accordance with Art. 153(4) EPC

(43) Date of publication:
17.09.2025 Bulletin 2025/38

(51) International Patent Classification (IPC):
*B01J 23/34* (2006.01)      *B01J 21/06* (2006.01)
*B01J 37/08* (2006.01)

(21) Application number: 25723584.6

(22) Date of filing: 23.01.2025

(86) International application number:
PCT/KR2025/001375

(87) International publication number:
WO 2025/159550 (31.07.2025 Gazette 2025/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.01.2024 KR 20240010328

(71) Applicant: Quantum Cat Co., Ltd.
Daejeon 34028 (KR)

(72) Inventors:
• KANG, Shin-Hyun
  Sejong 30127 (KR)
• LIM, Sung-Hwan
  Sejong 30123 (KR)

(74) Representative: Schmidt, Steffen J.
Wuesthoff & Wuesthoff
Patentanwälte und Rechtsanwalt PartG mbB
Schweigerstrasse 2
81541 München (DE)

(54) **TITANIUM DIOXIDE COMPOSITE CATALYST CONTAINING MANGANESE AND METHOD FOR REMOVING ODOR**

(57)     A composite catalyst according to the disclosure is a titanium oxide composite catalyst containing a transition metal including manganese. The composite catalyst contains at least one active oxygen species selected from the consisting of surface-adsorbed oxygen and hydroxyl radicals on the surface, in a UV-Vis spectral spectrum, a ratio ($A_{500}/A_{300}$) of absorbance at a wavelength of 500 nm ($A_{500}$) divided by absorbance at a wavelength of 300 nm ($A_{300}$) is 0.85 or more, and in a hydrogen- temperature programmed reduction profile, a peak is positioned in a temperature range of 240 to 275°C. The composite catalyst according to the present disclosure may effectively remove odors such as VOCs.

FIG. 5

EP 4 616 942 A1

## Description

Technical Field

The present disclosure relates to a titanium oxide composite catalyst containing manganese and a method for removing odors using the same.

Background Art

Various odors originating from the external environments are emerging as serious social problems and are the cause of various civil complaints, requiring effective treatment methods suitable for each environment. Meanwhile, in closed spaces such as within residential buildings such as houses, hotels, and restaurants, or transportation means such as cars and subways, odors cause discomfort, and in the closed spaces in which odors are generated, odors may contaminate residents and various items, so that a technology is required to continuously remove odors to an appropriate concentration or lower.

Chemical equipment for removing odors has safety issues and is difficult to install, especially in a closed space, so an adsorbent is used to remove odors. However, the adsorbent has a limited adsorption capacity and should be regenerated or replaced periodically. However, in reality, it is difficult for consumers to regenerate the adsorbent, so the adsorbent should be replaced at regular intervals. In addition, in a closed environment in which the amount of odors discharged is not constant, the lifespan of the adsorbent is not constant, so odors may easily contaminate other items in the surrounding area, causing inconvenience in use.

A technology to remove odors using a catalyst has the advantage of not requiring periodic replacement, but has the problem that activity of the catalyst drops sharply under conditions such as low temperature or humid environments, resulting in a very short lifespan of the catalyst. Accordingly, there is a need for the development of an oxidation catalyst that can reliably remove odors for a long period of time by maintaining the activity of the catalyst to be constant even under various harsh conditions.

Summary of Invention

Technical Problem

An aspect of the present disclosure is to provide a catalyst having excellent activity for removing harmful gases including odors under harsh conditions such as humid environments.

Another aspect of the present disclosure is to provide a long-life oxidation catalyst for removing odors for a long period of time without an additional regeneration operation in a closed environment.

Another aspect of the present disclosure is to provide a highly active oxidation catalyst for oxidizing various odors including various types of volatile organic compounds at relatively low temperatures.

Solution to Problem

According to an aspect of the present disclosure, a composite catalyst is a titanium oxide composite catalyst containing a transition metal including manganese, wherein the composite catalyst contains at least one active oxygen species selected from the group consisting of surface-adsorbed oxygen and hydroxy radicals on the surface, wherein in a UV-Vis spectral spectrum, a ratio ($A_{500}/A_{300}$) of absorbance at a wavelength of 500 nm ($A_{500}$) divided by absorbance at a wavelength of 300 nm ($A_{300}$) is 0.85 or more, and in a hydrogen-temperature programmed reduction profile, a peak is positioned in a temperature range of 240 to 275°C.

In a specific example, in a hydrogen-temperature programmed reduction profile of the composite catalyst, a second peak may be positioned in a temperature range of 345 to 420°C.

In a specific example, in an X-ray photoelectron spectral (XPS) spectrum of the composite catalyst, the composite catalyst has a lattice oxygen peak derived from lattice oxygen, an adsorbed oxygen peak derived from surface-adsorbed oxygen, and a hydroxy peak derived from hydroxy radicals, and a ratio ($[O_2 + O_3]/O_1 \times 100$, %) of the sum of an area of the hydroxy peak ($O_3$) and an area of the adsorbed oxygen peak ($O_2$) divided by an area of the lattice oxygen peak ($O_1$) may be 45 to 85%, and a ratio ($O_3/O_2 \times 100$, %) of the area of the hydroxy peak ($O_3$) divided by the area of the adsorbed oxygen peak ($O_2$) may be 50% or less.

In a specific example, in an oxygen-temperature programmed desorption profile of the composite catalyst, a first area fraction ($A_{500-600}$) occupied by an area obtained by integrating a lower portion of the oxygen-temperature programmed desorption profile in a temperature range of 500 to 600°C may be 1 to 20%, and a second area fraction ($A_{600-850}$) occupied by an area obtained by integrating the lower portion of the oxygen-temperature programmed desorption profile in a temperature range of 600 to 850°C may be 20 to 40%, of the total area obtained by integrating the lower portion of the oxygen-temperature programmed desorption profile in a temperature range of 40 to 850°C.

In a specific example, in an X-ray diffraction pattern of the composite catalyst, an intensity ratio ($I_{101}/I_{110}$) of an intensity $I_{101}$ of a diffraction peak of a (101) plane of an anatase phase divided by an intensity $I_{110}$ of a diffraction peak of a (110) plane of a rutile phase may be 4 to 8.

In a specific example, in the X-ray diffraction pattern of the composite catalyst, an intensity ratio ($I_{101}/I_{200}$) of the intensity $I_{101}$ of the diffraction peak of the (101) plane of the anatase phase divided by of an intensity $I_{200}$ of a diffraction peak of a (200) plane of the anatase phase may be 4.15 or less.

In a specific example, in the X-ray diffraction pattern, the composite catalyst may not include a diffraction peak due to manganese and manganese oxide.

In a specific example, the manganese may be included in an amount of 1 to 15 wt% relative to the total weight of the composite catalyst.

In a specific example, the transition metal may be comprised of manganese.

In a specific example, the composite catalyst may be a catalyst for decomposing volatile organic compounds.

The present disclosure includes an odorous gas remover including the composite catalyst described above.

The present disclosure includes a method for removing odorous gas using the composite catalyst described above.

According to an aspect of the present disclosure, the method for removing odorous gas includes: S1) an operation in which a first gas including an odorous gas is supplied to a reaction space in which a titanium oxide composite catalyst containing a transition metal including manganese is positioned; S2) an operation in which the odorous gas in the first gas is in contact with the composite catalyst and the odorous gas is decomposed; and S3) an operation in which a second gas generated by the decomposition of the odorous gas is discharged from the reaction space.

In a specific example, the odorous gas may include at least one selected from the group consisting of aldehyde-based compounds, aromatic hydrocarbons, aliphatic hydrocarbons, ammonia-based compounds, and mercaptan-based compounds.

In a specific example, in the operation S1), the first gas may contain moisture.

Advantageous Effects of Invention

As set forth above, according to a specific example, a catalyst may effectively remove harmful gases containing odors under harsh conditions such as humid environments.

According to another specific example, activity of a catalyst may be maintained to be constant in low temperature or humid environments, and the catalyst may remove odors for a long period of time without an additional regeneration operation in a closed environment. Specifically, the catalyst according to the present disclosure may remove various odors including mercaptan-based compounds in a refrigerated environment with low temperature and high humidity, and provide a high level of convenience as it does not require an additional regeneration operation due to poisoning of the catalyst.

According to another specific embodiment, a catalyst may effectively oxidize various volatile organic compounds causing odors at relatively low temperatures.

According to another specific embodiment, a catalyst may effectively remove an odorous gas reliably for a long period of time.

Brief Description of Drawings

FIG. 1 is a transmission electron microscope photograph (scale bar 50 nm) illustrating a titanium oxide used as a raw material in Example and a composite catalyst 1 manufactured in Example 1.

FIG. 2 is a drawing illustrating an UV-Vis spectral spectrum result of a composite catalyst 1 manufactured in Example 1.

FIG. 3 is a drawing illustrating an UV-Vis spectral spectrum result of a composite catalyst 7 manufactured in Example 7.

FIG. 4 is a drawing illustrating an UV-Vis spectral spectrum result of a comparative catalyst 4 manufactured in Comparative Example 4.

FIG. 5 is a drawing illustrating an $H_2$-TPR profile of a composite catalyst 1 manufactured in Example 1.

FIG. 6 is a drawing illustrating an O 1s XPS spectrum of a composite catalyst 1 manufactured in Example 1.

FIG. 7 is an $O_2$-TPD profile of a composite catalyst 1 manufactured in Example 1.

FIG. 8 is an X-ray diffraction pattern of a composite catalyst 1 manufactured in Example 1.

FIG. 9 is an X-ray diffraction pattern of a comparative catalyst 4 manufactured in Comparative Example 4.

Mode for Invention

Unless otherwise defined, technical and scientific terms used in this specification have the meaning commonly understood by a person of ordinary skill in the art to which the present disclosure belongs, and descriptions of well-known functions and configurations that may unnecessarily obscure the gist of the present disclosure are omitted in the following description and accompanying drawings.

In addition, singular forms used herein are intended to include plural forms as well, unless the context specifically indicates otherwise.

In addition, units used in the present specification without special mention are based on weight, and for example, units of % or ratio mean a weight% or a weight ratio, and the weight% means a weight% that one component of the entire composition occupies in the composition unless otherwise defined.

In addition, the numerical ranges used herein include lower and upper limits and all values within that range, increments logically derived from the shape and width of the defined range, all doubly defined values, and all possible combinations of upper and lower limits of numerical ranges defined in different shapes. Unless otherwise specifically defined in the specification of the present disclosure, values outside a numerical range that may occur due to experimental errors or rounding of values are also included in the defined numerical range.

The term "comprises," as used herein, is an open description having the same meaning as the expressions "comprises," "contains," "has," or "is characterized by," and does not exclude additional elements, materials, or processes not listed herein.

In the present specification, when it is said that a portion such as a film (layer), a region, or a component is on or above another portion, it includes not only the case in which it is directly above and in contact with another portion, but also the case in which another film (layer), another region, and another component, is interposed therebetween.

In the present specification, a pollutant is not particularly limited as long as it is known to cause odors or to pollute the air, soil or water, but a more advantageous effect may be obtained for an air pollutant causing odors. Specifically, the pollutant may be a volatile organic compound (VOC). The VOC may be aldehyde-based compounds, aromatic hydrocarbons, aliphatic hydrocarbons, ammonia-based compounds or mercaptan-based compounds, and specific examples thereof may be methane, ethylene, formaldehyde, acetaldehyde, toluene, benzene, xylene, ethylene, styrene, ethylbenzene, acetaldehyde, trimethylamine, or methyl mercaptan, but an embodiment thereof is not limited thereto.

In the present specification, a titanium oxide may mean titanium dioxide, which may be represented by chemical formula of $TiO_2$, but does not necessarily mean a material in which Ti and O have a mathematically strict integer ratio of 1:2. As is well known, the ratio of Ti to O may deviate from 1:2 to some extent due to the inclusion of unavoidable impurities, doping of metal elements, unavoidable defects and/or adsorbed oxygen species or radicals. As a non-limiting example, the titanium oxide may be represented as $TiO_{2-x}$, where x may be from 0 to 0.5, from 0 to 0.4, from 0 to 0.3, from 0 to 0.2, or from 0 to 0.1.

<Composite catalyst>

A composite catalyst according to an aspect relates to a titanium oxide composite catalyst containing a transition metal including manganese. The composite catalyst contains at least one active oxygen species selected from the group consisting of surface-adsorbed oxygen and hydroxyl radicals on the surface, in a UV-Vis spectral spectrum, a ratio ($A_{500}/A_{300}$) of absorbance at a wavelength of 500 nm ($A_{500}$) divided by absorbance at a wavelength of 300 nm is 0.85 or more, and in a hydrogen-temperature programmed reduction profile, a peak is positioned in a temperature range of 240 to 275°C.

In the UV-Vis spectral spectrum, a value of $A_{500}/A_{300}$ is 0.85 or more, and in the hydrogen-temperature programmed reduction profile, a peak is positioned in the temperature range of 240 to 275°C, so that the composite catalyst may have both high activity and moisture resistance.

Advantageously, in the UV-Vis spectral spectrum, the value of $A_{500}/A_{300}$ may be 0.87 or more, 0.89 or more, 0.90 or more, 0.91 or more, 0.92 or more, or 0.93 or more, and substantially 1.00 or less or 0.98 or less. Advantageously and substantially, the value of $A_{500}/A_{300}$ may be 0.90 to 0.98, 0.92 to 0.98, or 0.93 to 0.98. More advantageously, the composite catalyst may satisfy the value of $A_{500}/A_{300}$ described above, and at the same time, in the UV-Vis spectral spectrum, a ratio ($A_{700}/A_{300}$) of absorbance at a wavelength of 700 nm ($A_{700}$) divided by absorbance at a wavelength of 300 nm ($A_{300}$) may be 0.85 to 0.97, specifically 0.87 to 0.95.

A size of a peak and a position of a peak in the $H_2$-temperature programmed reduction ($H_2$-TPR) profile may be properties determined by an oxidation state of manganese (manganese ions) contained in the composite catalyst, a degree of activity of manganese (manganese ions) having a specific oxidation state, and a degree of a content of manganese (manganese ions) having a specific oxidation state.

In the $H_2$-TPR profile of the composite catalyst, along with the UV-Vis spectral spectrum described above, the peak is positioned in a low temperature range of 240 to 275°C, so that the composite catalyst may have high activity for removing pollutants, especially mercaptan-based compounds, while also having improved moisture resistance.

Advantageously, the peak in the $H_2$-TPR profile of the composite catalyst may be positioned in the temperature range of 245 to 275°C, more advantageously 250 to 275°C. In this case, the composite catalyst may have improved moisture resistance along with high activity.

In the $H_2$-TPR profile of the composite catalyst, the peak positioned in the temperature range of 240 to 275°C, described above is set as a first peak, and in the $H_2$-TPR profile of the composite catalyst, a second peak may be positioned in a temperature range of 345 to 420°C. The first peak may be a peak due to manganese (manganese ions) having a higher oxidation number, and the second peak may be a peak due to manganese (manganese ions) having a lower oxidation number. In the $H_2$-TPR profile, the second peak is positioned in the temperature range of 345 to 420°C, advantageously 345 to 380°C, and more advantageously 350 to 380°C, so that the composite catalyst may have high activity and long-term moisture resistance.

Although not necessarily limited to such an interpretation, in order to simultaneously secure high activity and long-term moisture stability, when manganese doped in a lattice site, a defect site, or an interstitial site within the titanium oxide has instability that can effectively act as an active site or causes instability in the surrounding titanium oxide structure, while simultaneously suppressing excessive instability, it can be interpreted that both activity for removing pollutants and long-term stability against moisture are simultaneously secured. The degree of instability of manganese or caused by manganese described above may be represented by a temperature of the first peak of the $H_2$-TPR profile, further by the temperature of the first peak and a temperature of the second peak, and more further by the temperature of the first peak and the temperature of the second peak, and by a ratio ($H_1/H_2$) of a height of the first peak ($H_1$) and a height of the second peak ($H_2$).

In an advantageous example, the temperature of the first peak and the temperature of the second peak described above are satisfied, and at the same time, in the $H_2$-TPR profile, the ratio ($H_1/H_2$) of the height of the first peak ($H_1$) to the height of the second peak ($H_2$) is 0.5 or more, specifically, 0.5 to 5.0, advantageously, $H_1/H_2$ may be 2.0 to 5.0. In the $H_2$-TPR profile described above, the position of a peak may mean a position at the highest point of the peak, and the position of a peak in a certain temperature range may mean that the temperature at the highest point of the peak falls within the temperature range.

The composite catalyst has a lattice oxygen peak derived from lattice oxygen, an adsorbed oxygen peak derived from surface-adsorbed oxygen, and a hydroxy peak derived from hydroxy radicals in an X-ray photoelectron spectroscopy (XPS) spectrum, a first area ratio ($[O_2 + O_3]/O_1 \times 100$, %) of the sum of an area of the hydroxy peak ($O_3$) and an area of the adsorbed oxygen peak ($O_2$) divided by an area of the lattice oxygen peak ($O_1$), is 45 to 85%, and a second area ratio ($O_3/O_2 \times 100$, %) of the area of the hydroxy peak ($O_3$) divided by the area of the adsorbed oxygen peak ($O_2$), may be 50% or less, specifically 10 to 50%.

Since the composite catalyst satisfies a first area ratio of 45 to 85% and a second area ratio of 50% or less, specifically, the second area ratio of 5 to 50% or less in the XPS O 1s spectrum, the composite catalyst may exhibit high oxidation activity against various odor-causing VOCs, such as aldehyde-based compounds, aromatic compounds, aliphatic compounds, ammonia-based compounds, or mercaptan-based compounds, among pollutants.

Although not necessarily limited to such an interpretation, in the XPS O 1s spectrum, the first and second area ratios exhibit oxidation ability (activity as an oxidation catalyst) of the composite catalyst for pollutants, specifically VOCs which cause odors, and it can be interpreted that the composite catalyst has a large amount of surface-adsorbed oxygen and hydroxyl radicals, but surface-adsorbed oxygen is more advantageous than hydroxyl radicals in enhancing the oxidation ability for various VOCs.

In an advantageous example, the first area ratio may be 60 to 80%, and the second area ratio may be 10 to 30%, while satisfying the UV-Vis spectral properties and $H_2$-TPR profile characteristics described above.

The composite catalyst may satisfy the UV-Vis spectral properties and $H_2$-TPR profile characteristics described above, as well as the XPS O 1s spectral properties described above. The composite catalyst satisfying these properties exhibits high oxidation activity for various VOCs, excellent moisture resistance, and may exhibit enhanced oxidation activity even at low temperatures where a large amount of moisture is present.

In an $O_2$-Temperature programmed desorption ($O_2$-TPD) profile of the composite catalyst, a first area fraction ($A_{500-600}$), occupied by an area obtained by integrating a lower portion of the $O_2$-TPD profile in a temperature range of 500 to 600°C may be 1 to 20%, specifically 10 to 20%, and a second area fraction ($A_{600-850}$), occupied by an area obtained by integrating of the lower portion of the $O_2$-TPD profile in a temperature range of 600 to 850°C may be 20 to 40%, specifically 20 to 30%, of the total area obtained by integrating the lower portion of the $O_2$-TPD profile measured in a temperature range of 40 to 850°C.

Although not necessarily limited to such an interpretation, in the $O_2$-TPD profile, the temperature range of 500 to 600°C and the temperature range of 600 to 850°C may be interpreted as indicating the instability of lattice oxygen including a region adjacent to a surface of the composite catalyst, or in other words, the crystallographic stability in an internal region of the composite catalyst including the region adjacent to the surface.

Since the composite catalyst has relatively low values of the first area fraction and the second area fraction, the composite catalyst may maintain stable crystallinity including the region adjacent to the surface despite high activity, thereby having improved durability.

The composite catalyst may satisfy the UV-Vis spectral properties described above and the $H_2$-TPR profile characteristics described above, as well as the $O_2$-TPD properties described above. The composite catalyst satisfying such properties described above may exhibit high activity and improved moisture resistance while also exhibiting improved durability. Due to this improved durability, excellent catalytic activity can be maintained stably over a wide temperature range for a long period of time.

The composite catalyst may contain a titanium oxide of an anatase phase crystallographically, and advantageously may contain both titanium oxides of an anatase phase and a rutile phase. An anatase crystal phase and a rutile crystal phase may be identified through X-ray diffraction analysis, and if one or more diffraction peaks corresponding to the diffraction peak positions(s) of the titanium dioxide of the anatase phase and the titanium dioxide of the rutile phase defined in JCPDS are present, the titanium dioxide may be defined as containing the anatase crystal phase and the rutile crystal phase. A crystal size based on X-ray diffraction patterns in the composite catalyst may be a level of 10 to 40 nm, but an embodiment thereof is not limited thereto.

Relative contents of the anatase phase and the rutile phase contained in the composite catalyst may be indicated by an intensity ratio $I_{101}/I_{110}$ of a maximum intensity $I_{101}$ of a diffraction peak of a (101) plane of the anatase phase and a maximum intensity $I_{110}$ of a diffraction peak ($2\theta$ 27.7°) of a (110) plane of the rutile phase, in an X-ray diffraction pattern. In a preferred example, $I_{101}/I_{110}$ may be 4 to 8, preferably 5 to 7, more preferably 6 to 7. A titanium oxide of a composite phase in which the anatase phase and the rutile phase are mixed in this content is advantageous because the catalytic activity can be further improved by a synergistic effect of the two phases. However, it should not be interpreted that the titanium oxide contained in the composite catalyst of the present disclosure is comprised of anatase phase and rutile phase. The composite catalyst may further include titanium oxide in a brookite phase and/or amorphous phase.

X-ray diffraction patterns may represent macroscopic properties of composite catalyst crystallinity. A degree of crystallographic deformation/distortion caused by doping of transition metals including manganese, or the like, while a titanium oxide, which is a matrix in which doping is performed in the composite catalyst, maintains stable crystallinity, may be estimated by an intensity ratio ($I_{101}/I_{200}$) of the maximum intensity $I_{101}$ of a diffraction peak ($2\theta$ 25.3°) of the (101) plane of the anatase phase divided by a maximum intensity $I_{200}$ of a diffraction peak of a (200) plane of the anatase phase in the X-ray diffraction pattern of the composite catalyst. In a specific embodiment, $I_{101}/I_{200}$ may be 4.15 or less, specifically 2.50 to 4.15, and more specifically 2.50 to 4.10.

The composite catalyst may contain manganese (Mn), or may further contain at least one metal selected from the group consisting of iron (Fe), cobalt (Co), nickel (Ni), copper (Cu), and zinc (Zn) together with manganese (Mn). As an advantageous example, the composite catalyst may include a titanium oxide doped with a transition metal including manganese. As a practical example, the composite catalyst may be a composite catalyst including a manganese-doped titanium oxide, or a composite catalyst including a titanium oxide co-doped with manganese and at least one metal selected from the group consisting of iron (Fe), cobalt (Co), nickel (Ni), copper (Cu), and zinc (Zn).

The composite catalyst may have a particle shape, and an average particle diameter of the particles may be defined as $D_{50}$, and the average particle diameter is not limited to a specific range. The average particle diameter may mean a volume-based median diameter ($D_{50}$) calculated by laser diffraction. Cumulative volume $D_{50}$ refers to a particle diameter at a point at which a cumulative volume % is 50%, by volume %, in a cumulative distribution curve (a cumulative distribution curve) accumulated in order of a diameter of particles. Experimentally, the cumulative distribution curve including $D_{50}$ can be obtained by a conventional particle size analyzer using a laser diffraction method or a dynamic light scattering method.

The value of $D_{50}$ of the composite catalyst in the particle shape may be 0.01 μm or more, 0.05 μm or more, 0.1 μm or more, 0.2 μm or more, 0.3 μm or more, 0.4 μm or more, 0.5 μm or more, 0.7 μm or more, 0.8 μm or more, or 1 μm or more, and 1000 μm or less, 800 μm or less, 700 μm or less, 500 μm or less, 100 μm or less, 50 μm or less, 1 μm or less, 0.5 μm or less, or 0.1 μm or less. The value of $D_{50}$ of the composite catalyst in particle shape may be, for example, 0.01 μm to 1000 μm, 0.05 μm to 0.5 μm, 1 μm to 500 μm, 0.01 μm to 0.1 μm, or 0.01 μm to 1 μm.

The BET surface area of the composite catalyst may be 40 to 60 $m^2/g$, specifically 40 to 55 $m^2/g$, and more specifically 40 to 50 $m^2/g$.

Based on the total weight of the composite catalyst, a content of manganese contained in the composite catalyst may be 1 to 15 wt%, specifically 3 to 13 wt%, and more specifically 4 to 9 wt%.

A composite catalyst according to an embodiment may be effective in decomposing or removing pollutants. An example of decomposition or removal of a pollutant may be oxidation of the pollutant, which means converting the pollutant into another environmentally safe chemical species through a catalytic oxidation reaction using a composite catalyst according to an embodiment.

The composite catalyst may decompose pollutants in low, medium, and high temperature ranges. Specifically, it can effectively decompose pollutants in a low temperature range of -20 to 10°C, a medium temperature range of 10 to 100°C, and a high temperature range of 100 to 300°C.

Since the composite catalyst according to an embodiment has excellent long-term activity in which activity of a catalyst is maintained to be relatively constant even in a low-temperature and humid environment, the composite catalyst has excellent long-term activity that does not require additional operations for catalyst regeneration. Since the composite catalyst has excellent long-term activity, it can continuously oxidize and remove pollutants even in a closed environment in which pollutants are continuously generated. Therefore, simply by installing the composite catalyst in a certain space of the closed environment, contamination of the closed environment with pollutants may be effectively suppressed.

<Method for manufacturing a composite catalyst>

An aspect of the present disclosure relates to a method for manufacturing a titanium oxide composite catalyst containing a transition metal including manganese, and relates to a method for manufacturing a composite catalyst of the above-described embodiment. Therefore, the method for producing a composite catalyst includes all of the contents described above in the composite catalyst.

The method for manufacturing a composite catalyst according to an aspect includes: 1) an operation of preparing a dispersion in which titanium oxide particles are dispersed; 2) an operation of preparing a precursor solution in which a transition metal precursor including a manganese precursor is dissolved; 3) an operation of preparing a mixture by mixing the dispersion and the precursor solution; 4) an operation of adjusting pH of the mixture to a strongly alkaline range of 10.5 to 12.5; 5) an operation of vacuum filtering the pH-adjusted mixture to a strong alkaline range to recover a solids content; and 6) an operation of drying the recovered solids content and heat treating the same at a temperature within a range of 250 to 400°C for 2 to 4 hours.

Operation 1) is an operation of preparing a dispersion by dispersing titanium oxide particles in a solvent, and operation 2) is an operation of preparing a precursor solution by dissolving a transition metal precursor including a manganese precursor in a solvent. The solvent of operation 1) and the solvent of operation 2) may, independently of each other, be a polar solvent, specifically a polar protic solvent. For example, the solvent of) operation 1) and the solvent of operation 2) may independently be (C1-C7) alcohol, water or a cosolvent thereof, specifically (C1-C4) alcohol, water (including deionized water) or a cosolvent thereof, and more specifically water.

The titanium oxide particles of operation 1) may be titanium oxide particles in which an anatase phase and a rutile phase are advantageously mixed. $D_{50}$ of the titanium oxide particles may be 0.01 $\mu$m or more, 0.05 $\mu$m or more, 0.1 $\mu$m or more, 0.2 $\mu$m or more, 0.3 $\mu$m or more, 0.4 $\mu$m or more, 0.5 $\mu$m or more, 0.7 $\mu$m or more, 0.8 $\mu$m or more, or 1 $\mu$m or more, and may be 1000 $\mu$m or less, 800 $\mu$m or less, 700 $\mu$m or less, 500 $\mu$m or less, 100 $\mu$m or less, 50 $\mu$m or less, 1 $\mu$m or less, 0.5 $\mu$m or less, or 0.1 $\mu$m or less. For example, the $D_{50}$ may be 0.01 $\mu$m to 1000 $\mu$m, 0.05 $\mu$m to 0.5 $\mu$m, 1 $\mu$m to 500 $\mu$m, 0.01 $\mu$m to 0.1 $\mu$m, or 0.01 $\mu$m to 1 $\mu$m, but an embodiment thereof is not limited thereto. The titanium oxide particles may be commercial products in which an anatase phase and a rutile phase are mixed, and representative examples of such commercial products may be P25 (Evonik), or the like.

The transition metal precursor including a manganese precursor of operation 2) may be used if it is a transition metal compound which is soluble in a polar solvent, specifically, a polar protic solvent. As an example based on manganese, the precursor may be one or a combination of two or more selected from the group consisting of manganese acetate ($Mn(Ac)_2$), manganese nitrate ($Mn(NO_3)_2$), manganese chloride ($MnCl_2$), manganese acetylacetonate ($Mn(acac)_2$), and hydrates thereof. Advantageously, the manganese precursor may be one or more selected from organic-based precursors such as manganese acetate and manganese acetylacetonate.

The dispersion of operation 1) may contain 0.1 to 5 wt%, specifically 0.5 to 4 wt%, of titanium oxide particles, and the precursor solution of operation S2) may contain 0.1 to 5 wt%, specifically 0.3 to 3 wt%, of a transition metal precursor, but an embodiment thereof is not necessarily limited thereto.

A transition metal precursor including a manganese precursor may be mixed with a titanium oxide dispersed in a solvent while dissolved in a solvent. The mixture of the dispersant and the precursor solution of operation 3) may be performed in consideration of a mass of the titanium oxide contained the precursor solution and a mass of the transition metal including manganese contained in the precursor solution, so that the transition metal satisfies a range of 1 to 15 wt%, advantageously 1 to 10 wt%, and more advantageously 4 to 9 wt%, based on the total weight of the titanium oxide and the transition metal.

In operation 4, the mixed solution may be adjusted to a pH of 11.0 to 12.5, preferably a strongly alkaline range of 11.0 to 12.0, using a pH regulator. The pH regulator may be added to the mixture in a state dissolved in a polar protic solvent, for example, water. The pH adjuster may be a base such as ammonia, an amine compound, a quaternary ammonium compound, an alkali metal hydroxide or an alkaline earth metal hydroxide, preferably an alkali metal hydroxide, more preferably NaOH or KOH, and even more preferably NaOH. The mixture whose pH is adjusted to a strong alkaline range may be stirred for 10 to 60 minutes, specifically 20 to 50 minutes, but an embodiment thereof is not limited thereto.

Operation 5) is an operation for separating and recovering a solids content from the mixture in which the reaction has been completed. In order to separate and recover the solids content, any separation means known in this technical field, such as filtration or centrifugation, may be selected without limitation.

The recovered solids content is dried and heat treated in operation 6), so that a composite catalyst containing manganese may be prepared. Drying of operation 6) may be performed at a temperature within a range of 100 to 200°C, specifically 100 to 150°C. A drying time may be 2 to 24 hours, but an embodiment thereof is not limited thereto. thermal treatment of operation 6) may be performed at a temperature within a range of 250 to 400°C, advantageously 300 to 350°C, for 2 to 4 hours. The thermal treatment of the dried solids content may be performed in the air, and a temperature increase rate during drying or thermal treatment may be 1 to 10°C/min, but an embodiment thereof is not necessarily limited thereto.

The solids content recovered from the mixture may be dried in a state in which it is washed with water before drying or dried in an unwashed state, and advantageously, the solids content may be dried in a state in which it is recovered by solid-liquid separation such as filtration without being washed.

<Odorous gas remover>

Another aspect of the present disclosure relates to an odorous gas remover including a titanium oxide composite catalyst containing a transition metal including manganese. The odorous gas remover may include the composite catalyst of the above-described embodiment. Therefore, the odorous gas remover includes all the contents described above in the composite catalyst.

In a specific example, the odorous gas remover may be a composite catalyst. The odorous gas remover may include composite catalyst particles (powder), aggregates of composite catalyst particles, or a shaped body in which the composite catalyst is shaped into a desired shape. In this case, the shape of the shaped body in which the composite catalyst is shaped may be any shape commonly used in the field of removing odorous gas using a catalyst. Practical examples of the shaped body may include bulk, spherical particle, cylindrical or ring-shaped pellet, honeycomb, and fiber forms, but an embodiment thereof is not limited thereto.

In a specific example, the odorous gas remover may be a coating product in which the above-described composite catalyst is coated on a support. The support may be a ceramic support such as alumina, silicon nitride, silica, zeolite, or the like; a metal support such as stainless steel, or the like; a carbon-based support such as activated carbon, or the like; or an organic support such as a synthetic resin, a natural polymer, a biocompatible polymer, a thermosetting resin, a thermoplastic resin, or a mixed resin thereof, or the like. The shape of the support is not particularly limited, but may include a honeycomb shape, a sphere, a cylinder or a ring-shaped pellet shape, a plate shape, a porous mesh or porous foam shape, a woven or non-woven fiber shape, or the like. As a more practical example, the odorous gas remover may include a fabric, filter, film or fiber, or the like, in which the composite catalyst described above is contained on the surface or inside thereof. In this case, the filter may be a gas treatment filter, and the gas may include air (atmosphere), or the like.

The odorous gas remover may be manufactured by a method commonly used for coating a catalyst material on a support, such as immersion, spraying, or slurry coating, and the odorous gas remover may contain 5 to 50 wt% of a composite catalyst based on the total weight of the support and the composite catalyst, but an embodiment thereof is not limited thereto. In this case, if necessary, a binder component may be used to stably fix the composite catalyst to the support.

<Product having odorous gas removal ability>

Another aspect of the present disclosure relates to a product including a titanium oxide composite catalyst containing a transition metal including manganese. A product having odor gas removal ability by a composite catalyst may include a composite catalyst of the above-described embodiment. Therefore, the product includes all of the contents described above in the composite catalyst.

A product having an odorous gas removal ability may be a product which requires odor gas removal properties and includes the composite catalyst described above or the odorous gas remover described above on a surface of the product or in a predetermined space of the product. When a composite catalyst is contained on the surface, examples thereof may include a body of a product having a surface region formed by the composite catalyst, or a coating layer containing a composite catalyst formed on any surface of the body of the product.

As a practical example of a product having an odorous gas removal ability, there may be provided the composite catalyst or the odorous gas remover described above, and a storage device in which food, medicine, industrial products, or the like, are stored, and as a more practical example, a refrigerated storage device, or the like.

<Method for removing odorous gas>

An aspect of the present disclosure relates to a method for removing odorous gas, the method including: S1) an operation of supplying a first gas including an odorous gas to a reaction space in which a titanium oxide composite catalyst containing a transition metal including manganese is positioned; S2) an operation of decomposing the odorous gas in the first gas by contacting the composite catalyst; and S3) an operation of discharging a second gas generated by the decomposition of the odorous gas from the reaction space. The composite catalyst is a composite catalyst of the above-described embodiment. Accordingly, the method for removing odorous gas includes all of the contents described above in the composite catalyst.

The composite catalyst within the reaction space may be a fluidized bed or a fixed bed, and as a practical example, a predetermined region of the reaction space may be filled with the composite catalyst or the composite catalyst in the form of the odorous gas remover described above.

The first gas may be, but is not necessarily limited to, air including an odorous gas.

The reaction space may be an open space into which a first gas may be introduced and a second gas may be discharged. The open space may be implemented through opening(s) connecting the interior and exterior of a reactor which divides the reaction space, but an embodiment thereof is not limited thereto. A composite catalyst is located inside the reactor, and a first gas may be introduced into the reactor. The odorous gas in the introduced first gas may be in contact with the composite catalyst inside the reactor, so that the odorous gas is decomposed and removed, and a second gas from which the odorous gas has been removed may be generated. The generated second gas may be discharged outside the reactor. An example of the generated second gas may include air (atmosphere), or the like, from which odors have been removed, but an embodiment thereof is not limited thereto.

The first gas and the second gas may be introduced and discharged into the reaction space by spontaneous flow such as convection, or the like without the aid of external devices. Alternatively, the first gas and the second gas may be introduced and discharged into the reaction space by a device which causes a conventional gas flow, such as a pump, blower, fan, or the like, which can forcibly introduce and discharge external fluid.

The first gas may be air within a sealed device, such as air inside a refrigerated storage device, or the like, but an embodiment thereof is not limited thereto. For example, the first gas may be air (atmosphere) to which a large number of people are exposed, air (atmosphere) to which forced ventilation is required, or air to which vulnerable groups, such as the elderly, are exposed for long periods or repeatedly. More specific examples may include air (atmosphere) inside buildings such as hospitals, government offices, schools, commercial facilities, and residential facilities, and air (atmosphere) in transportation facilities such as subways, buses, and vehicles.

Due to the high moisture resistance of the composite catalyst described above, the first gas does not require pretreatment to remove moisture. Accordingly, the first gas may contain moisture, and as a practical example, the first gas may have a relative humidity of more than 0 and 100% or less, more practically a state humidity of 10 to 90%, and further, a state humidity of 50 to 90%, and the first gas containing such moisture may be supplied to the reaction space.

Hereinafter, embodiments of the present disclosure will be described in detail. However, these are presented as examples, and the present disclosure is not limited thereby, and the present disclosure is defined only by the scope of the claims described below.

<Analysis and evaluation method>

X-ray Diffraction Analysis

X-ray diffraction patterns of catalyst samples manufactured in Examples and Comparative Examples were measured using an X-ray diffraction analyzer (SmartLab, Rigaku). XRD analysis was performed using Cu-K$\alpha$ (wavelength = 0.15406 nm) as an X-ray source by a $\theta$-2$\theta$ method, and was performed under the conditions of 40 kV, 20 mA, and 5°/min scan rate. A maximum intensity value of a diffraction peak was used as an intensity of the diffraction peak.

Ultraviolet-Visible Diffuse Reflectance Spectroscopy (UV-Vis DRS)

UV-Vis DRS was performed using a UV-Vis diffuse reflectance spectrometer (V-770, JASCO) equipped with an integrating sphere. For baseline correction, a baseline was set using Spectralon® standard samples, and light reflected from the catalyst samples prepared in Examples and Comparative Examples was collected to measure absorbance of each sample. A thickness of the catalyst sample was 0.5 mm when measuring absorbance.

X-ray Photoelectron Spectroscopy (XPS)

XPS spectra were measured for the catalyst samples manufactured in Examples and Comparative Examples using an X-ray photoelectron spectroscopy analyzer (K-Alpha+, Thermo scientific). A monochromatic X-ray of Al-K$\alpha$ (1486.6 ev) was used as a light source, and analysis was performed under the conditions of 200 $\mu$m beam diameter, 12 kV, and 10 mA.

Hydrogen Temperature Programmed Reduction ($H_2$-TPR)

$H_2$-TPR analysis was performed on catalyst samples manufactured in Examples and Comparative Examples. For the $H_2$-TPR analysis, AutoChem II 2920 (Micromeritics) was used, and 0.1 g of catalyst sample was filled into a fixed-bed glass reactor with a diameter of 9 mm, and argon gas was flowed at 30 ml/min and pretreated at 100°C for 1 hour. Thereafter, a hydrogen/argon mixture gas having a hydrogen concentration of 10% by volume was flowed into the glass reactor at a rate of 30 ml/min, and the reactor was heated from 100°C to 800°C at a rate of 10°C/min using an electric furnace. An amount of unreacted hydrogen was measured using a thermal conductivity detector (TCD, Micromeritics). An $H_2$-TPR profile is a profile of a TCD signal according to temperature (°C). Peaks positioned in the measured $H_2$-TPR profile were sequentially defined as a first peak and a second peak from a low-temperature side to a high-temperature side, and the highest point of each peak in the $H_2$-TPR profile was defined as the position of the corresponding peak.

$O_2$-Temperature Programmed Desorption ($O_2$-TPD)

Autochem II 2920 (Micromeritics) was used for the analysis of $O_2$-TPD. 0.1 g of each catalyst sample was filled into a fixed-bed glass reactor with a diameter of 9 mm, and the glass reactor was pretreated for 1 hour at 105°C with helium gas flowing at 30 ml/min, and then cooled to 40°C. Thereafter, oxygen gas was flowed at 30 ml/min for 1 hour, and then purging was performed with helium gas (30 ml/min). Under these conditions, the temperature was increased to 850°C at a rate of 10°C/min, and an amount of oxygen desorbed was measured using a thermal conductivity gas analyzer (Thermal Conductivity Detector, Micromertics). An $O_2$-TPD profile is a profile of a TCD signal according to temperature (°C). When calculating an area fraction by temperature range, a baseline was removed from the $O_2$-TPD profile, an area of a lower portion of the $O_2$-TPD profile in the entire measured temperature range was calculated, and an area of the lower portion of the $O_2$-TPD profile in the set temperature range was calculated to calculate an area fraction in the corresponding temperature range.

Cumulative Volume-Based Median Diameter Analysis ($D_{50}$)

0.1 g of catalyst samples manufactured in Examples and Comparative Examples was suspended in water, and the manufactured suspension was sonicated for 2 minutes, and then a cumulative volume diameter distribution was measured using a laser diffraction particle size distribution measuring device (Mastersizer 2000, Malvern Instruments). A median diameter $D_{50}$ of a material to be analyzed means a diameter at a position at which a cumulative volume is 50% in the cumulative volume diameter distribution.

Inductively Coupled Plasma Optical Emission Spectrometry (ICP-OES)

A composition of catalyst samples manufactured in Examples and Comparative Examples was analyzed using Avio 220 Max ICP-OES. The catalyst samples were added to a mixture of nitric acid, hydrochloric acid, and hydrofluoric acid in equal volume ratios, completely dissolved at a temperature of 180°C, cooled to room temperature, homogenized (diluted) by mixing deionized water, and then the homogenized solution was used for ICP-OES measurement.

Surface area

Catalyst samples manufactured in Examples and Comparative Examples were degassed at 473 K to 20 μTorr for 12 hours, and then nitrogen ($N_2$) adsorption-desorption tests were performed at 77 K using a 3Flex adsorption analyzer (Micromeritics). In this case, a BET specific surface area of the catalyst sample was obtained using a nitrogen adsorption isotherm and the Brunauer-Emmett-Teller (BET) formula.

Characteristics of Removing Odorous Gas

0.1 g of composite catalysts according to Example and Comparative Example was filled into a 1/4 inch fixed-bed glass reaction tube, 300 sccm of Air gas including 80 ppm of methyl mercaptan, 100 sccm of Air gas including 10 ppm of formaldehyde, 100 sccm of Air gas including 10 ppm of trimethylamine, or 50 sccm of Air gas including 5 ppm of toluene were supplied to one end of the reaction tube as gas compositions, respectively, and the other end of the reaction tube was connected to GC-MS (Gas Chromatography-Mass Spectroscopy, Agilent) to measure a concentration of odorous gas discharged from the other end of the reaction tube. In a gas removal characteristic experiment, moisture supply (relative humidity, RH) was supplied by passing the Air gas, which is a carrier, through a reactor filled with water (RH 70%), and a fixed-bed glass reactor having a catalyst was maintained at 0°C using an ice jacket, and a conversion of each gas was calculated according to the following formula.

$$\text{Conversion (\%)} = (1 - C_{out}/C_{in}) \times 100$$

$C_{in}$ is a concentration of the introduced odorous gas (ppm), and $C_{out}$ is a concentration of the odorous gas after passing through a reaction tube (ppm).

(Example 1)

900 g of $TiO_2$(P25, Evonik) was added to 50 L of distilled water and stirred for 15 minutes to prepare a $TiO_2$ dispersion, and 300 g of manganese acetate ($MnAc_2 \cdot 4H_2O$, Deoksan) was added to 25 L of distilled water and stirred for 15 minutes to prepare a manganese precursor aqueous solution. Thereafter, the prepared manganese precursor aqueous solution was added to the $TiO_2$ dispersion and stirred for 1 hour to prepare a mixture. After adjusting pH to 11.5 by adding an NaOH aqueous solution to the prepared mixture, the mixture was stirred for 30 minutes. Thereafter, the pH-adjusted mixture was vacuum filtered to recover a solids content, and the recovered solids content was dried at 120°C for 12 hours by increasing the temperature at a rate of 5°C/min. The temperature of the dried solids content powder was increased at a rate of 1.5°C/min and heat treated in the air at 300°C for 3 hours to manufacture a composite catalyst 1. A BET surface area of the composite catalyst 1 was 45.9 m$^2$/g, a manganese content of the composite catalyst 1 was 6.7 wt%, and $D_{50}$ of the composite catalyst 1 was 63 nm.

(Example 2)

A composite catalyst 2 was manufactured in the same manner as in Example 1, except that a KOH aqueous solution was used instead of a NaOH aqueous solution, in Example 1 above.

(Example 3)

A composite catalyst 3 was manufactured in the same manner as in Example 1, except that pH of a mixture was adjusted to 11.0 using an NaOH aqueous solution and thermal treatment of the dried solids content powder was performed at 350°C for 3 hours, in Example 1 above.

(Example 4)

A composite catalyst 4 was manufactured in the same manner as in Example 1, except that 800 g of $TiO_2$(P25, Evonik) was added to 50 L of distilled water and stirred for 15 minutes to prepare a $TiO_2$ dispersion, 600 g of manganese acetate ($MnAc_2 \cdot 4H_2O$, Deoksan) was added to 25 L of distilled water and stirred for 15 minutes to prepare a manganese precursor aqueous solution, and a NaOH aqueous solution was added to adjust pH to 11.0, in Example 1 above. A manganese content of the composite catalyst 4 was 13 wt%.

(Example 5)

A composite catalyst 5 was manufactured in the same manner as in Example 1, except that a solids content recovered by vacuum filtration was not dried immediately, but the recovered solids content was mixed with 50 L of water, filtered, washed, and then dried and heat treated, in Example 1 above.

(Example 6)

A composite catalyst 6 was manufactured in the same manner as in Example 1, except that an ammonia aqueous solution ($NH_4OH$ solution) was used instead of a NaOH solution when adjusting pH of a mixture, in Example 1 above.

(Example 7)

A composite catalyst 7 was manufactured in the same manner as in Example 1, except that pH of a mixture was controlled to 12.5 when adjusting the pH, and the dried solids content powder was heat treated in the air at 400°C for 2 hours, in Example 1 above.

(Comparative Example 1)

$TiO_2$(P25, Evonik) was used as a catalyst. Hereinafter, the catalyst of Comparative Example 1 is collectively referred to as a comparative catalyst 1. $D_{50}$ of the comparative catalyst 1 was 62 nm.

(Comparative Example 2)

$MnO_2$(Sigma Aldrich, Cas No. 1313-13-9) was used as a catalyst. Hereinafter, the catalyst of Comparative Example 2 is collectively referred to as a comparative catalyst 2.

(Comparative Example 3)

200 g of manganese chloride ($MnCl_2 \cdot 4H_2O$) was dissolved in 30 L of distilled water and stirred for 15 minutes to prepare solution A. Then, 800 g of $TiO_2$(P25, Evonik) was added to the solution A and stirred for 15 minutes to prepare solution B. 200 g of $KMnO_4$ was dissolved in 20 L of distilled water to prepare solution C. Thereafter, the solution C was slowly added to the solution B at a rate of 50 ml/min to prepare a reaction solution, ultrasonic waves were applied to the reaction solution for 30 minutes, and then it was heated at 80°C for 12 hours and precipitates were recovered. The recovered precipitates were washed 10 times with 50 L of distilled water, dried at 80°C for 12 hours, and heat treated in the air at 300°C for 3 hours to prepare a comparative catalyst 3.

(Comparative Example 4)

900 g of the $TiO_2$(P25, Evonik) was added to 50 L of distilled water and stirred for 15 minutes to prepare a $TiO_2$ dispersion, and 300 g of manganese acetate ($MnAc_2 \cdot 4H_2O$, Deoksan) was added to 25 L of distilled water and stirred for 15 minutes to prepare a manganese precursor aqueous solution. Thereafter, the prepared manganese precursor aqueous solution was added to the $TiO_2$ dispersion and stirred for 1 hour to prepare a mixture. The prepared mixture was dried at 120°C overnight to obtain a dried product, and the temperature of the obtained dried product was increased at a rate of 1.5°C/min and heat treated in the air at 500°C for 3 hours to prepare a comparative catalyst 4.

(Comparative Example 5)

A comparative catalyst 5 was manufactured in the same manner as in Example 1, except that when adjusting pH of a mixture, an ammonia aqueous solution ($NH_4OH$ solution) was gradually added instead of an NaOH aqueous solution to finally reach a pH of 9, and the reaction was performed for 10 hours, as in Example above.

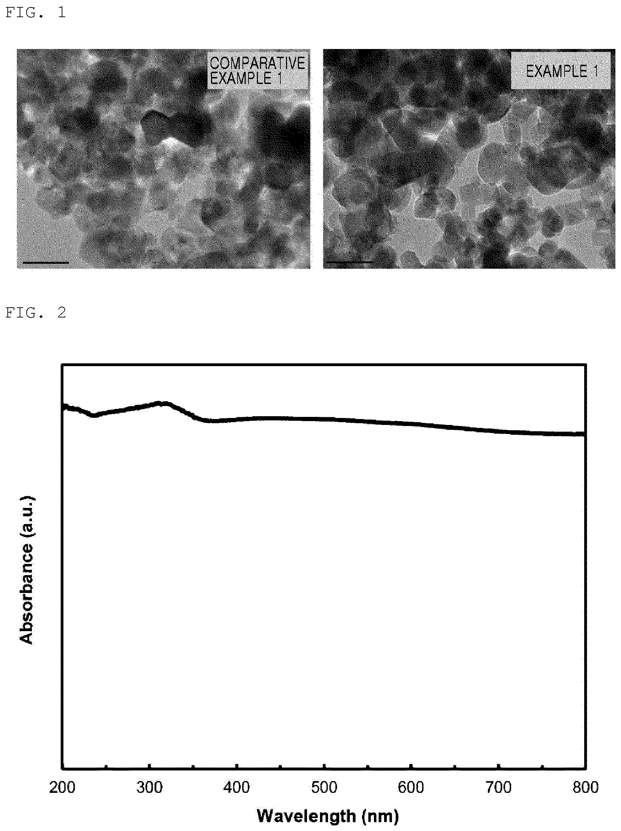

FIG. 1 is a transmission electron microscope photograph of titanium oxide (corresponding to a comparative catalyst 1, Comparative Example 1 of FIG. 1) used as a raw material in Example and a comparative catalyst 1 manufactured in Example 1 (Example 1 of FIG. 1). As shown in the transmission electron microscope observation results of FIG. 1, no significant difference was found in the shape or primary particle size distribution of a titanium oxide used as a raw material and a titanium oxide between the composite catalysts manufactured in Example 1, and no heterogeneous particles or coatings adhered to the surface of the titanium oxide primary particles were substantially observed.

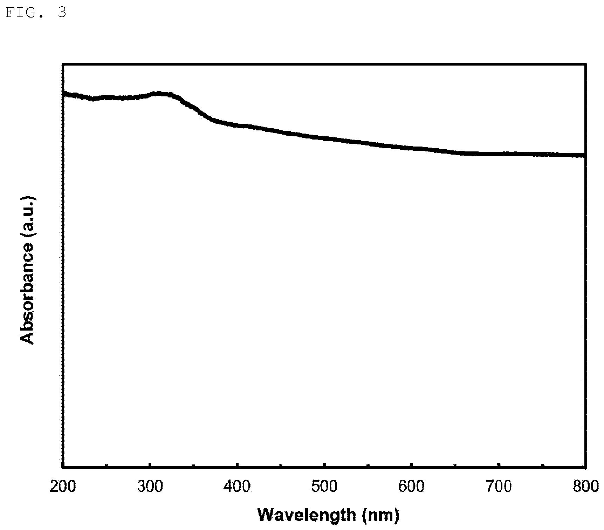

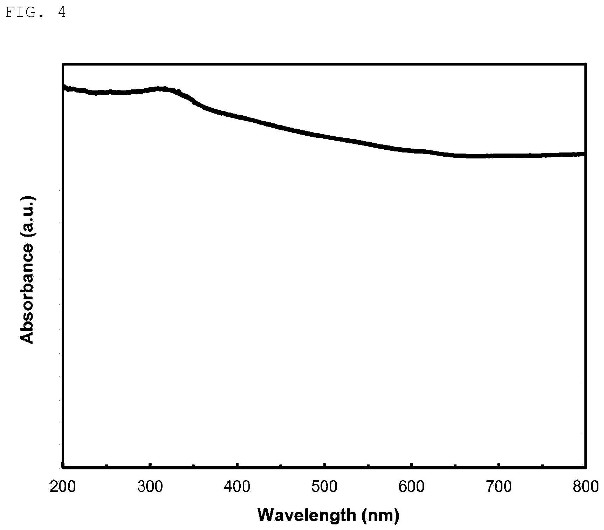

FIG. 2 is a drawing illustrating an UV-Vis spectral spectrum result of a composite catalyst 1 manufactured in Example 1, FIG. 3 is a drawing illustrating an UV-Vis spectral spectrum result of a composite catalyst 7 manufactured in Example 7, and FIG. 4 is a drawing illustrating an UV-Vis spectral spectrum result of a comparative catalyst 4 manufactured in Comparative Example 4. In the UV-Vis spectral spectra of the catalysts manufactured in the Examples and Comparative Examples, a ratio ($A_{500}/A_{300}$) of absorbance at a wavelength of 500 nm ($A_{500}$) divided by absorbance at a wavelength of 300 nm ($A_{300}$) and a ratio ($A_{700}/A_{300}$) of absorbance at a wavelength of 700 nm ($A_{700}$) divided by absorbance at a wavelength of 300 nm ($A_{300}$) are summarized in Table 1.

[Table 1]

| | $A_{500}/A_{300}$ | $A_{700}/A_{300}$ | | $A_{500}/A_{300}$ | $A_{700}/A_{300}$ |
|---|---|---|---|---|---|
| Composite catalyst 1 | 0.97 | 0.94 | Composite catalyst 7 | 0.88 | 0.86 |
| Composite catalyst 2 | 0.93 | 0.89 | Comparative catalyst 1 | 0.23 | 0.25 |
| Composite catalyst 3 | 0.93 | 0.91 | Comparative catalyst 2 | 0.97 | 0.98 |
| Composite catalyst 4 | 0.93 | 0.89 | Comparative catalyst 3 | 0.63 | 0.70 |
| Composite catalyst 5 | 0.94 | 0.91 | Comparative catalyst 4 | 0.89 | 0.85 |
| Composite catalyst 6 | 0.92 | 0.89 | Comparative catalyst 5 | 0.90 | 0.86 |

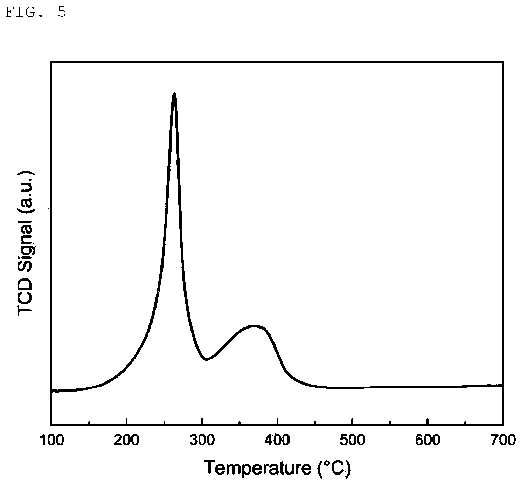

FIG. 5 is a drawing illustrating an H$_2$-TPR profile of a composite catalyst 1 manufactured in Example 1. In H$_2$-TPR profiles of catalysts manufactured in Examples and Comparative Examples, peaks positioned sequentially in a direction in which a temperature increases were set as a first peak and a second peak, and a temperature each peak at the highest point was set as a first peak temperature (°C) and a second peak temperature (°C), which are summarized in Table 2 below. In addition, a height of the first peak at the highest point (signal intensity) was set as H$_1$, and a height of the second peak at the highest point (signal intensity) was set as H$_2$, and a ratio of H$_1$/H$_2$ is summarized in Table 2.

[Table 2]

|  | First peak temperature | Second peak temperature | H$_1$/H$_2$ |
|---|---|---|---|
| Composite catalyst 1 | 263.3 | 369.9 | 4.6 |
| Composite catalyst 2 | 250.1 | 376.9 | 2.0 |
| Composite catalyst 3 | 273.2 | 365.0 | 2.8 |
| Composite catalyst 4 | 268.5 | 374.6 | 2.7 |
| Composite catalyst 5 | 246.1 | 348.1 | 2.7 |
| Composite catalyst 6 | 254.5 | 361.3 | 2.6 |
| Composite catalyst 7 | 246.4 | 417.2 | 0.8 |
| Comparative catalyst 1 | - | - | - |
| Comparative catalyst 2 | 344.0 | 536.6 | 0.4 |
| Comparative catalyst 3 | 418.6 | 531.4 | 0.3 |
| Comparative catalyst 4 | 287.8 | 380.8 | 0.9 |
| Comparative catalyst 5 | 238.3 | 351.0 | 1.2 |

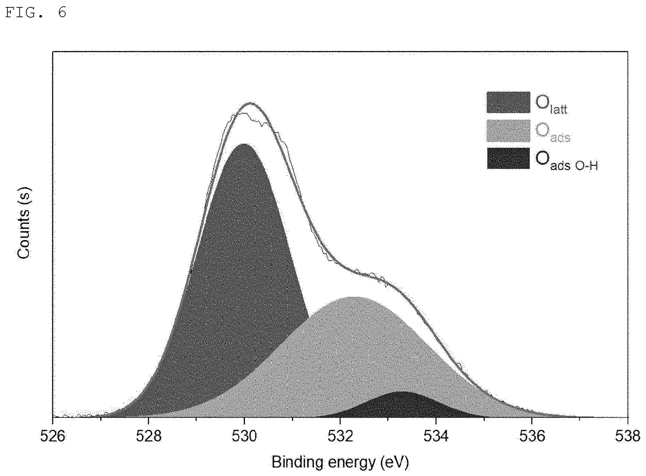

FIG. 6 is a drawing illustrating an O 1s XPS spectrum of composite catalyst 1 manufactured in Example 1. The O 1s XPS spectrum of the catalyst is a deconvoluted spectrum with a lattice oxygen peak (529.2-529.9 eV) derived from lattice oxygen, an adsorbed oxygen peak (531.2-532.7 eV) derived from surface-adsorbed oxygen, and a hydroxy peak (532.9-533.5 eV) derived from hydroxy radicals, which was then fitted with a Gaussian function to deconvolute the spectrum. In the O 1s XPS spectra of the catalysts manufactured in Examples and Comparative Examples, a ratio ([O$_2$ + O$_3$]/O$_1$×100, %) of the sum of an area of the hydroxy peak (O$_3$) and an area of the adsorbed oxygen peak (O$_2$) divided by an area of the lattice oxygen peak (O$_1$) was 45 to 85%, and a ratio (O$_3$/O$_2$×100, %) of the area of the hydroxy peak (O$_3$) divided by the area of the adsorbed oxygen peak (O$_2$) is summarized in Table 3.

[Table 3]

|  | [O$_2$ +O$_3$]/O$_1$×100 | O$_3$/O$_2$×100 |  | [O$_2$ +O$_3$]/O$_1$×100 | O$_3$/O$_2$×100 |
|---|---|---|---|---|---|
| Composite catalyst 1 | 78% | 11% | Composite catalyst 7 | 35% | 38% |
| Composite catalyst 2 | 64% | 23% | Comparative catalyst 1 | 18% | 0% |
| Composite catalyst 3 | 71% | 28% | Comparative catalyst 2 | 41% | 0% |
| Composite catalyst 4 | 74% | 24% | Comparative catalyst 3 | 56% | 41% |
| Composite catalyst 5 | 64% | 54% | Comparative catalyst 4 | 51% | 15% |
| Composite catalyst 6 | 71% | 95% | Comparative catalyst 5 | 50% | 58% |

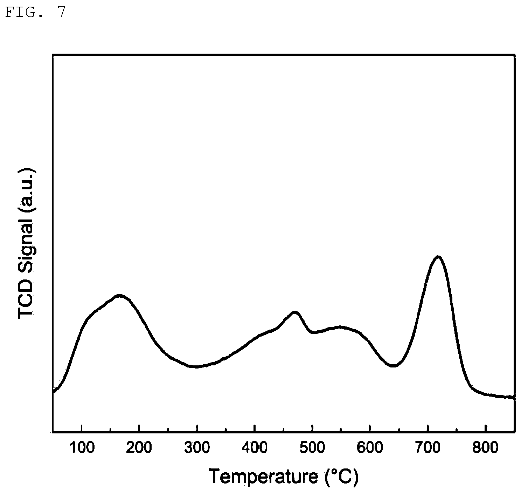

FIG. 7 is an O$_2$-TPD profile of a composite catalyst 1 manufactured in Example 1. In the O$_2$-TPD profiles of the catalysts manufactured in Examples and Comparative Examples, an area fraction (A$_{500-600}$) occupied by an area obtained by integrating a lower portion of the spectrum in a temperature range of 500 to 600°C and an area fraction (A$_{600-850}$) occupied by an area obtained by integrating the lower portion of the spectrum in a temperature range of 600 to 850°C are summarized in Table 4, of the total area obtained by integrating the lower portion of the O$_2$-TPD profile measured in a temperature range of 40 to 850°C. In this case, [100 - A$_{500-600}$ - A$_{600-850}$] corresponds to the area fraction occupied by the integrated area of the lower portion of the spectrum in the temperature range of 40 to 500°C.

[Table 4]

|  | $A_{500-600}$ | $A_{600-850}$ |  | $A_{500-600}$ | $A_{600-850}$ |
|---|---|---|---|---|---|
| Composite catalyst 1 | 15% | 27% | Composite catalyst 7 | 4% | 36% |
| Composite catalyst 2 | 11% | 23% | Comparative catalyst 1 | 0% | 4% |
| Composite catalyst 3 | 15% | 21% | Comparative catalyst 2 | 56% | 41% |
| Composite catalyst 4 | 18% | 40% | Comparative catalyst 3 | 13% | 42% |
| Composite catalyst 5 | 14% | 29% | Comparative catalyst 4 | 9% | 32% |
| Composite catalyst 6 | 15% | 28% | Comparative catalyst 5 | 11% | 38% |

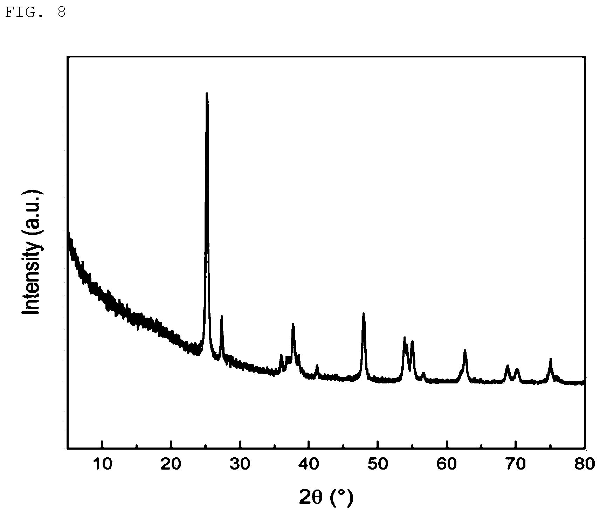

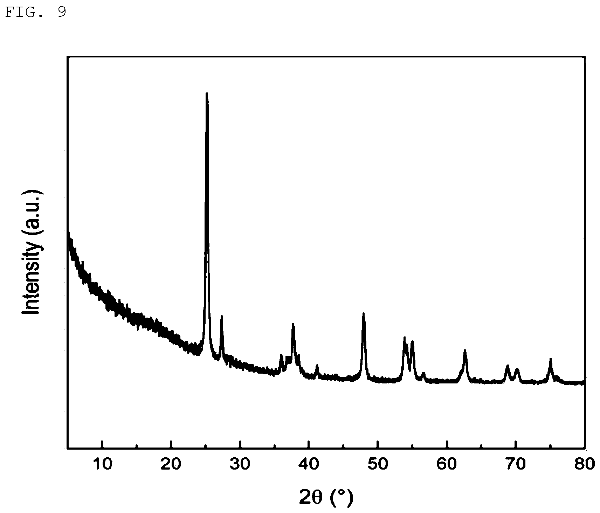

FIG. 8 is an X-ray diffraction pattern of a composite catalyst 1 manufactured in Example 1, and FIG. 9 is an X-ray diffraction pattern of a comparative catalyst 4 manufactured in Comparative Example 4. As in the example of FIG. 8, in the composite catalysts manufactured in Examples 1 to 7, no peaks due to manganese or manganese oxide were detected in the X-ray diffraction pattern, but in the case of a comparative catalyst 4, a peak due to manganese oxide was detected.

In all composite catalysts manufactured in Examples 1 to 7, peaks due to an anatase phase and peaks due to a rutile phase were detected. In the X-ray diffraction patterns of the composite catalysts manufactured in Examples 1 to 7, an intensity ratio ($I_{101}/I_{110}$) of a maximum intensity $I_{101}$ of a diffraction peak ($2\theta$ 25.3°) of an (101) plane of the anatase phase divided by a maximum intensity $I_{110}$ of a diffraction peak ($2\theta$ 27.7°) of a (110) plane of the rutile phase was in a range of 6.21 to 6.60, which is a similar value to the intensity ratio ($I_{101}/I_{110}$) of 6.71 of the titanium oxide (comparative catalyst 1) used as a raw material.

An intensity ratio ($I_{101}/I_{200}$) of the maximum intensity $I_{101}$ of the diffraction peak ($2\theta$ 25.3°) of the (101) plane of the anatase phase divided by a maximum intensity $I_{200}$ of a diffraction peak of a (200) plane of the anatase phase, in the X-ray diffraction patterns of the composite catalysts manufactured in Examples 1 to 7 and the titanium oxide used as a raw material (comparative catalyst 1), is summarized in Table 5 below.

[Table 5]

|  | $I_{101}/I_{200}$ |  | $I_{101}/I_{200}$ |
|---|---|---|---|
| Composite catalyst 1 | 4.09 | Composite catalyst 5 | 4.06 |
| Composite catalyst 2 | 3.96 | Composite catalyst 6 | 4.09 |
| Composite catalyst 3 | 2.82 | Composite catalyst 7 | 3.87 |
| Composite catalyst 4 | 3.78 | Comparative catalyst 1 | 4.18 |

A methyl mercaptan removal performance, formaldehyde removal performance, trimethylamine removal performance, and toluene removal performance of the catalysts manufactured in Examples and Comparative Examples are summarized in Tables 6, 7, 8, and 9. In the tables, RH=0% is a state without moisture (humidity), RH=70% is a state containing moisture (humidity) with a relative humidity of 70%, 5 minutes is a removal efficiency at 5 minutes after an odor-containing gas is supplied to a fixed-bed glass reactor, and 1 hour is a removal efficiency at 60 minutes after the odor-containing gas is supplied to the fixed-bed glass reactor.

[Table 6]

| Methyl mercaptan removal performance | | | | |
|---|---|---|---|---|
| Humidity | RH=0% | RH=0% | RH=70% | RH=70% |
| Time | 5 minutes | 1hour | 5 minutes | 1hour |
| Composite catalyst 1 | 100% | 100% | 100% | 100% |
| Composite catalyst 2 | 100% | 100% | 98% | 98% |
| Composite catalyst 3 | 100% | 100% | 97% | 99% |
| Composite catalyst 4 | 100% | 100% | 99% | 98% |
| Composite catalyst 5 | 95% | 93% | 94% | 93% |
| Composite catalyst 6 | 94% | 90% | 94% | 90% |

(continued)

| Methyl mercaptan removal performance | | | | |
|---|---|---|---|---|
| Composite catalyst 7 | 100% | 98% | 92% | 89% |
| Comparative catalyst 1 | 0% | 0% | 0% | 0% |
| Comparative catalyst 2 | 51% | 45% | 31% | 8% |
| Comparative catalyst 3 | 82% | 76% | 77% | 43% |
| Comparative catalyst 4 | 83% | 78% | 75% | 42% |
| Comparative catalyst 5 | 75% | 64% | 72% | 49% |

[Table 7]

| Formaldehyde removal performance | | | | |
|---|---|---|---|---|
| Humidity | RH=0% | RH=0% | RH=70% | RH=70% |
| Time | 5 minutes | 1 hour | 5 minutes | 1 hour |
| Composite catalyst 1 | 100% | 100% | 100% | 100% |
| Composite catalyst 2 | 100% | 100% | 96% | 92% |
| Composite catalyst 3 | 100% | 100% | 96% | 94% |
| Composite catalyst 4 | 100% | 100% | 100% | 99% |
| Composite catalyst 5 | 96% | 95% | 92% | 92% |
| Composite catalyst 6 | 94% | 93% | 88% | 85% |
| Composite catalyst 7 | 90% | 83% | 84% | 82% |
| Comparative catalyst 1 | 0% | 0% | 0% | 0% |
| Comparative catalyst 2 | 63% | 55% | 51% | 22% |
| Comparative catalyst 3 | 72% | 64% | 78% | 42% |
| Comparative catalyst 4 | 75% | 71% | 67% | 61% |
| Comparative catalyst 5 | 66% | 54% | 64% | 36% |

[Table 8]

| Trimethylamine removal performance | | | | |
|---|---|---|---|---|
| Humidity | RH=0% | RH=0% | RH=70% | RH=70% |
| Time | 5 minutes | 1 hour | 5 minutes | 1 hour |
| Composite catalyst 1 | 100% | 100% | 100% | 100% |
| Composite catalyst 2 | 100% | 100% | 100% | 100% |
| Composite catalyst 3 | 100% | 100% | 100% | 100% |
| Composite catalyst 4 | 100% | 100% | 99% | 99% |
| Composite catalyst 5 | 91% | 88% | 89% | 88% |
| Composite catalyst 6 | 89% | 82% | 80% | 79% |
| Composite catalyst 7 | 92% | 83% | 75% | 73% |
| Comparative catalyst 1 | 0% | 0% | 0% | 0% |
| Comparative catalyst 2 | 56% | 50% | 32% | 11% |
| Comparative catalyst 3 | 77% | 68% | 75% | 48% |
| Comparative catalyst 4 | 73% | 65% | 60% | 41% |

(continued)

| Trimethylamine removal performance | | | | |
|---|---|---|---|---|
| Comparative catalyst 5 | 70% | 55% | 64% | 31% |

[Table 9]

| Toluene removal performance | | | | |
|---|---|---|---|---|
| Humidity | RH=0% | RH=0% | RH=70% | RH=70% |
| Time | 5 minutes | 1 hour | 5 minutes | 1 hour |
| Composite catalyst 1 | 100% | 100% | 100% | 100% |
| Composite catalyst 2 | 100% | 100% | 100% | 100% |
| Composite catalyst 3 | 100% | 100% | 100% | 100% |
| Composite catalyst 4 | 100% | 100% | 100% | 100% |
| Composite catalyst 5 | 100% | 98% | 99% | 96% |
| Composite catalyst 6 | 99% | 95% | 95% | 91% |
| Composite catalyst 7 | 91% | 91% | 95% | 95% |
| Comparative catalyst 1 | 0% | 0% | 0% | 0% |
| Comparative catalyst 2 | 70% | 50% | 50% | 7% |
| Comparative catalyst 3 | 81% | 65% | 69% | 37% |
| Comparative catalyst 4 | 88% | 71% | 76% | 20% |
| Comparative catalyst 5 | 80% | 58% | 71% | 42% |

While example embodiments have been shown and described above, it will be apparent to those skilled in the art that modifications and variations could be made without departing from the scope of the present disclosure as defined by the appended claims.

**Claims**

1.   Provided is a composite catalyst, which is a titanium oxide composite catalyst containing a transition metal including manganese,

wherein the composite catalyst contains at least one active oxygen species selected from the group consisting of surface-adsorbed oxygen and hydroxy radicals on the surface,
in a UV-Vis spectral spectrum, a ratio ($A_{500}/A_{300}$) of absorbance at a wavelength of 500 nm ($A_{500}$) divided by absorbance at a wavelength of 300 nm ($A_{300}$) is 0.85 or more, and
in a hydrogen-temperature programmed reduction profile, a peak is positioned in a temperature range of 240 to 275°C.

2.   The composite catalyst of claim 1, wherein in the hydrogen-temperature programmed reduction profile, a second peak is positioned in a temperature range of 345 to 420°C.

3.   The composite catalyst of claim 1, wherein in an X-ray photoelectron spectral (XPS) spectrum of the composite catalyst, the composite catalyst has a lattice oxygen peak derived from lattice oxygen, an adsorbed oxygen peak derived from surface-adsorbed oxygen, and a hydroxy peak derived from hydroxy radicals,
wherein a ratio ($[O_2 + O_3]/O_1 \times 100$, %) of the sum of an area of the hydroxy peak ($O_3$) and an area of the adsorbed oxygen peak ($O_2$) divided by an area of the lattice oxygen peak ($O_1$) is 45 to 85%, and a ratio ($O_3/O_2 \times 100$, %) of the area of the hydroxy peak ($O_3$) divided by the area of the adsorbed oxygen peak ($O_2$) is 50% or less.

4.   The composite catalyst of claim 1, wherein in an oxygen-temperature programmed desorption profile of the composite catalyst, a first area fraction ($A_{500\text{-}600}$) occupied by an area obtained by integrating a lower portion of the oxygen-temperature programmed desorption profile in a temperature range of 500 to 600°C is 1 to 20%, and a second area fraction ($A_{600-850}$) occupied by an area obtained by integrating the lower portion of the oxygen-temperature programmed desorption profile in a temperature range of 600 to 850°C is 20 to 40%, of the total area obtained by integrating the lower portion of the oxygen-temperature programmed desorption profile in a temperature range of 40 to 850°C.

5.  The composite catalyst according to any one of claim 1 to 4, wherein in an X-ray diffraction pattern of the composite catalyst, an intensity ratio ($I_{101}/I_{110}$) of an intensity $I_{101}$ of a diffraction peak of a (101) plane of an anatase phase divided by an intensity $I_{110}$ of a diffraction peak of a (110) plane of a rutile phase is 4 to 8.

6.  The composite catalyst of claim 5, wherein in the X-ray diffraction pattern of the composite catalyst, an intensity ratio ($I_{101}/I_{200}$) of the intensity $I_{101}$ of the diffraction peak of the (101) plane of the anatase phase divided by an intensity $I_{200}$ of a diffraction peak of a (200) plane of the anatase phase is 4.15 or less.

7.  The composite catalyst of claim 5, wherein in the X-ray diffraction pattern of the composite catalyst, the composite catalyst does not include a diffraction peak due to manganese and manganese oxide.

8.  The composite catalyst of claim 1, wherein, with respect to the total weight of the composite catalyst, the manganese is included in an amount of 1 to 15 wt%.

9.  The composite catalyst of claim 1, wherein the transition metal is comprised of manganese.

10. The composite catalyst of claim 1, wherein the composite catalyst is a catalyst for decomposing volatile organic compounds.

11. An odorous gas remover comprising a composite catalyst of claim 1.

12. A method for removing odorous gas, comprising:

    S1) an operation in which a first gas including an odorous gas is supplied to a reaction space in which a composite catalyst of claim 1 is positioned;
    S2) an operation in which the odorous gas in the first gas is in contact with the composite catalyst and the odorous gas is decomposed; and
    S3) an operation in which a second gas generated by the decomposition of the odorous gas is discharged from the reaction space.

13. The method for removing odorous gas of claim 12, wherein the odorous gas is at least one selected from the consisting of aldehyde-based compounds, aromatic hydrocarbons, aliphatic hydrocarbons, ammonia-based compounds, and mercaptan-based compounds.

14. The method for removing odorous gas of claim 12, wherein in the S1) operation, the first gas contains moisture.

EP 4 616 942 A1

FIG. 1

FIG. 2

FIG. 3

FIG. 4

FIG. 5

FIG. 6

FIG. 7

FIG. 8

FIG. 9

## INTERNATIONAL SEARCH REPORT

| International application No. |
| --- |
| **PCT/KR2025/001375** |

**A. CLASSIFICATION OF SUBJECT MATTER**

**B01J 23/34**(2006.01)i; **B01J 21/06**(2006.01)i; **B01J 37/08**(2006.01)i

According to International Patent Classification (IPC) or to both national classification and IPC

**B. FIELDS SEARCHED**

Minimum documentation searched (classification system followed by classification symbols)

B01J 23/34(2006.01); B01D 53/86(2006.01); B01J 21/06(2006.01); B01J 23/75(2006.01); B01J 37/00(2006.01); B01J 37/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 촉매(catalyst), 망간(manganese), 티탄산화물(titanium dioxide), 악취(odor)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | HU, D. et al. Promoting effect of Ru-doped Mn/TiO2 catalysts for catalytic oxidation of chlorobenzene. New Journal of Chemistry. 2022, vol. 46, document no. 22, pp. 10820-10828.<br>See abstract; pages 10820-10825; tables 1-2; and figure 7. | 1,5,8,10-13<br>2-4,6-7,9,14 |
| A | LI, Y. et al. Catalytic Combustion of n-Hexanal Using Cu-Mn Composite Oxide Supported on TiO2. Acta Physico-Chimica Sinica. 2016, vol. 32, no. 8, pp. 2084-2092.<br>See pages 2085-2086. | 1-14 |
| A | KR 10-2004-0013216 A (CERACOMB CO., LTD.) 14 February 2004 (2004-02-14)<br>See abstract; and claims 1-7. | 1-14 |
| A | KR 10-2018-0055027 A (ECOPRO CO., LTD.) 25 May 2018 (2018-05-25)<br>See abstract; and claim 14. | 1-14 |
| A | KR 10-2010-0037499 A (SEO, Phil Won) 09 April 2010 (2010-04-09)<br>See abstract; and claim 1. | 1-14 |

☐ Further documents are listed in the continuation of Box C.　　☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **02 May 2025** | **02 May 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/001375**

| Patent document cited in search report | | | Publication date (day/month/year) | Patent family member(s) | | | Publication date (day/month/year) |
|---|---|---|---|---|---|---|---|
| KR | 10-2004-0013216 | A | 14 February 2004 | KR | 10-0511564 | B1 | 02 September 2005 |
| KR | 10-2018-0055027 | A | 25 May 2018 | None | | | |
| KR | 10-2010-0037499 | A | 09 April 2010 | KR | 10-0998325 | B1 | 03 December 2010 |

Form PCT/ISA/210 (patent family annex) (July 2022)